# EUROPÄISCHE PATENTANMELDUNG

(11) **EP 1 927 507 A1**
(43) Veröffentlichungstag der Anmeldung: **04.06.2008**
(21) Anmeldenummer: 07022981.0
(22) Anmeldetag: 27.11.2007
(51) Int. Cl.: B60Q 1/02, B61L 15/02, F21S 8/10, F21V 31/03

(54) **LED-Anordnung für eine Leuchte, insbesondere einen Scheinwerfer oder ein Signalllicht für ein Schienenfahzeug, mit einem Heizelement**

(30) Priorität: 27.11.2006 DE 102006056271
(71) Anmelder: Pintsch Bamag Antriebs- und Verkehrstechnik GmbH, 46537 Dinslaken (DE)
(72) Erfinder: Oesterwind, Ulf, 45473 Mühlhelm an der Ruhr (DE)
(74) Vertreter: Kreutzer, Ulrich

(57) **Zusammenfassung**

LED-Anordnung (10) zum Einbau in eine Leuchte, Insbesondere einen Scheinwerfer oder ein Signalllcht, Insbesondere eines Schienenfahrzeuges, umfassend eine Platine (20) mit wenigstens einer LED, wenigstens ein strombetriebenes Heizelement (14) und wenigstens einen mit dem Heizelement In direktem oder indirektem Kontakt stehenden Konvektor (16) umfaßt.

Die LED-Anordnung erlaubt es, klassische Glühlempen ohne besonderen Aufwand zu ersetzen und gleichzeitig aber auch die zur Entfernung bzw. Vermeidung von Kondenswasser und/oder Eis und Schnee erforderliche Wärme zu erzeugen.

## Beschreibung

### GEBIET DER ERFINDUNG

Die Erfindung betrifft eine LED-Leuchte, insbesondere einen LED-Scheinwerfer und ein LED-Signallicht, Insbesondere für Schlenenfahrzeuge, eine LED-Anordnung für eine Leuchte wie Insbesondere einen Scheinwerfer oder ein Signallicht, insbesondere für Schienenfahrzeuge, sowie eine Heizung für eine LED-Leuchte, insbesondere für Schienenfahrzeuge.

Unter dem Begriff "Leuchte" wird hier allgemein eine Einrichtung zum Aussenden von Licht verstanden, bei der wenigstens eine Lichtquelle, hier in Form wenigstens einer LED, Licht durch eine Leuchtenschelbe aussendet, wobei die Leuchtenscheibe eine Streuscheibe oder eine sonstige Abschlußscheibe eines oft als "Lampenkasten" bezeichneten Leuchtengehäuses ist und wobei das Leuchtengehäuse nicht notwendigerweise eine tatsächlich gesonderte bauliche Einheit darstellen muß, sondern sich das Gehäuse quasi von selbst durch andere Bauelemente wie z.B. Karosserleteils ergeben kann, Eine Leuchte muß also nicht notwendigerweise eine separate Baueinheit sein, sondern umgebende Teile können die Innenwände eines Leuchtengehäuses bilden, in welchem dann ein Leuchtmittel angeordnet wird und vor das eine entsprechende Scheibe, die nicht notwendigerweise aus Glas sein muß, gesetzt wird.

### HINTERGRUND DER ERFINDUNG

Die Vorteile der LED-Technik, wie insbesondere die Im Vergleich zu Glühlampen extrem hohe Lebensdauer bei gleichzeitig geringem Stromverbrauch, sind hinreichend bekannt und in einer Vielzahl von Anmeldungen beschrieben. Man trachtet deshalb danach, in unterschiedlichsten technischen Bereichen Glühlampen durch LEDs zu ersetzen.

Die gute Energieausnutzung bei den LEDs führt jedoch dazu, daß im Vergleich zu normalen Glühlampen nur ein ganz geringer Prozentsatz der zugeführten elektrischen Energie in Wärme umgesetzt wird. Bei verschiedenen Anwendungen hat jedoch die von Glühlampen erzeugte Wärme durchaus einen positiven Nutzen, nämlich daß Kondenswasser- oder Elsbildung auf dem Leuchtenglas verhindert bzw. etwalg gebildetes Eis oder Kondenswasser durch die Wärme der Glühlampen im Betrieb zum Abschmelzen bzw. Ablaufen gebracht wird, Dies ist bei allen Arten von im Freien verwendeten Leuchten von Bedeutung, wie insbesondere Leuchten von Fahrzeugen wie z.B. Scheinwerfern und Signallichtern von Zügen, Markierungeleuchten von Landebahnen bei Flughäfen, Seezeichen etc.

Es sind verschiedene LED-Leuchten mit beheizten Leuchtengläsern bekannt. So ist z.B. bekannt, auf dem Leuchtenglas einen Heizdraht oder mehrere Heizdrähte nach Art der beheizten Heckscheibe bei Kraftfahrzeugen anzubringen (siehe z.B. DE 198 63 337 A1). Damit können theoretisch zwar auch sogenannte Freiformscheiben ausgestattet werden, deren Form bestimmte, an das Fahrzeugdesign angepaßte Wölbungen aufweisen, jedoch ist eine Nachrüstung bereits eingebauter Scheiben mit einer solchen Heizung nicht ohne weiteres möglich, da diese Scheiben meistens geklebt und nur sehr aufwendig zu entfernen sind. Zudem erfordern solche Scheibenheizdrähte meist eine spezielle Stromversorgung, in der Regel auf Basis von 6 oder 12 V, was es z.B. im Bereich der Schienenfahrzeuge, deren Bordnetz auf 110 V beruht, nötig machte, eine spezielle Stromversorgung zu den Leuchtenscheiben zu führen, was bei modernen Lokomotiven und Triebwagen, bei denen bereits das Wechsein eines normalen Leuchtmittels einen Aufwand von mehreren Mannstunden darstellt, praktisch unmöglich Ist.

Daneben ist bekannt, in das Scheibenglas ein Siliziummaterial einzudiffundieren und dann an die Scheibe eine Gleichspannung von z.B. 24 V anzulegen. Auch dieses Verfahren ist sehr aufwendig und wird bislang nur bei Flachglasseheiben angewandt.

Es sind auch separate Scheibenheizungen bekannt, z.B. aus der EP 1 718127 A1 oder der DE 103 46 270 A1, die im Leuchtengehäuse der Leuchtenscheibe angeordnet werden und in Ihrer Form der Form der Leuchtenscheibe folgen, so daß Ihre Anpassung an die bereits erwähnten Freiformschelben nur mit großem Aufwand möglich Ist und sie insbesondere für ein einfaches Nachrüsten in denjenigen Fällen, In denen bei einem vorhandenen Leuchtengehäuse eine Glühlampe durch LED-Technik ersetzt werden soll, nicht geeignet sind. Aus der DE 10 2004 025 623 A1 ist eine Zusatzheizung für Kraftfahrzeugscheinwerfer bekannt, mittels welcher ein gerichteter Luftstrom erzeugt werden kann, der im Leuchtengehäuse zirkuliert. Auch diese Lösung eignet sich nicht für eine einfache Nachrüstung.

In der US 6,801,983 81 wird vorgeschlagen, In der Mitte einer mit einer Vielzahl von LEDs bestückten Trägerscheibe eine Art "Minihochleistungshelzstrahler" nebst Reflektor anzuordnen, um eine ausreichend hohe Wärmestrahlung zum Abtauen der Leuchtenscheibe zu erzielen. Diese Lösung hat sich allerdings In der Praxis als untauglich erwiesen, da LEDs für eine maximale Betriebstemperatur von etwa 50° C ausgelegt sind und die Lebensdauern von LEDs mit steigender Temperatur exponentiell abnehmen. Die in der genannten US-Schrift vorgeschlagene Lösung bedingt aber die Erzeugung eines sehr heißen Bereiches in unmittelbarer Umgebung der LEDs, so daß zumindest die dem Heizstrahler benachbarten LEDs durch die von dem Heizstrahler im Betrieb erzeugte Wärme in Mitleidenschaft gezogen werden. Zudem werden gerade bei Schienenfahrzeugen durch die Betreiber regelmäßig sehr genaue und spezifische Anforderungen an die Lichtverteilung und -Intensität gestellt, so daß genaue LED-Anordnungen auf der Trägerscheibe getroffen werden müssen und es nicht einfach möglich ist, den Bereich des Heizstrahlers zu meiden.

Ist keine separate Scheibenheizung vorgesehen, gleichzeitig aber gefordert, zur Vermeidung bzw. Entfernung von Kondenswasser und/oder Eis und Schnee die Scheibe zu beheizen, so stellt das Ersetzen klassischer Glühlampen durch LEDs ein erhebliches Problem dar. LEDs werden Immer lichtstärker, gleichzeitig aber auch energieeffizienter, so daß es heute problemlos möglich ist, eine 50-W-Glühlampe durch LEDs mit einer Leistungsaufnahme von 7 W zu ersetzen. Hält man sich vor Augen, daß bei bestimmten modernen Lokomotiven und Triebwagen die Glühlampen alle zwei bis drei Wochen gewechselt werden müssen, der Wechsel einer einzigen Lampe oft aber zwei Personen und zwei bis drei Arbeitsstunden erfordert, so wäre es schon aufgrund des gesparten Wartungsaufwandes, aber auch aufgrund der eingesparten Energie, ein erheblicher wirtschaftlicher und technischer Vorteil, wenn es gelänge, bei bestehenden Leuchten die klassischen Glühlampen durch LED-Technik zu ersetzen. Ein besonderes Problem stellen dabei die bereits erwähnten Freiformscheiben Insbesondere bei Schienenfahrzeugen dar, da sich für diese Scheiben aufgrund der verhältnismäßig geringen Stückzahl anders als z.B. im Automobilbereich keine Speziallösungen wie z,B. speziell angepaßte Folienhelzungen oder speziell ausgeformte Zusatzheizungen eignen, denn diese bedingen zunächst hohe Kosten für Formenbau u.dgl., so daß solche Lösungen erst bei großen Stückzahlen wirtschaftlich vertretbar werden.

### AUFGABE UND ZUSAMMENFASSUNG DER ERFINDUNG

Davon ausgehend liegt der Erfindung die Aufgabe zugrunde, eine LED-Anordnung zum Einbau In eine Leuchte, Insbesondere einen Scheinwerfer oder ein Signallicht, anzugeben, mittels welcher klassische Glühlampen gerade bei Schienenfahrzeugen ohne besonderen Aufwand insbesondere auch bei Freiformscheiben ersetzt werden können und mit welcher gleichzeitig aber auch die zur Entfernung bzw. Vermeidung von Kondenswasser und/oder Eis und Schnee erforderliche Warme erzeugt werden kann.

Die Aufgabe wird gelöst von einer LED-Anordnung mit den Merkmalen des Anspruchs 1. Vorteilhafte Ausgestaltungen und Weiterbildungen sind Gegenstand der entsprechenden Unteransprüche. Der nebengeordnete Anspruch 7 betrifft eine Heizung für eine LED-Leuchte, der nebengeordnete Anspruch 12 eine entsprechende LED-Leuchte, der nebengeordnete Anspruch 14 betrifft ein mit einer erfindungsgemäßen Heizung bzw. einer erfindungsgemäßen LED-Anordnung ausgestattetes Fahrzeug, insbesondere ein Schienenfahrzeug.

Durch das Vorsehen eines strombetriebenen Heizelementes und eines entsprechenden Konvektors, z.B. in Form eines gerippten Aluminiumprofils wie es von Kühlelementen bekannt ist, kann in besonders einfacher Weise die zum Betreiben des jeweiligen Leuchtmittels ohnehin vorhandene Stromversorgung auch zur Beheizung der Umgebung des Leuchtmittels und damit auch der den Witterungseinflüssen unmittelbar ausgesetzten Leuchtenscheibe verwendet werden. Die Erfindung erlaubt es damit, eine Anordnung zu schaffen, bei der auch bei vorhandenen Leuchten Glühlampen durch LED-Technik ersetzt werden können. Gerade im Bereich der Schienenfahrzeuge, bei denen bislang ein regelmäßiger Austausch der Glühlampen erforderlich war, wird dadurch ein erheblicher Vorteil erzielt.

Das Beheizen der Umgebung der LED hat aber nicht nur die beschriebene vorteilhafte Auswirkung auf die Leuchtenscheibe, es wird dadurch auch verhindert, daß sich bei weißen LEDs der Farbort vom Weißen ins Blaue verschiebt. Dies ist gerade bei Signallichtern von Bedeutung, bei denen die Anwender oft strenge Anforderungen an den Farbort stellen. Andererseits erlaubt es der erfindungsgemäß vorgesehen Konvektor, mit einer relativ geringen Temperaturdifferenz zu arbeiten, d.h. die unmittelbare Umgebung des Konvektors und der Konvektor selbst werden, anders als z.B. bei einem Heizstrahler, nicht wesentlich heißer als die anderen Bereiche In der Leuchte, so daß vorteilhaft die Lebensdauer der LEDs und deren Farborte nicht durch den Konvektor beeinträchtigt werden. Dieser besonders wichtige Effekt beruht nach derzeitigem Kenntnisstand auf der erfindungsgemäßen vorteilhaften Ausnutzung der Konvektion zur Wärmeübertragung, wobei betont sei, daß alle Konvektoren natürlich zum Teil auch als Radiatoren arbeiten und umgekehrt, also Wärme zum Teil auch durch Wärmestrahlung abgeben, so wie Radiatoren Wärme immer auch zum Teil durch Konvektion übertragen. Daher werden die Begriffe Konvektor und Radiator oft synonym zur Bezeichnung von Wärmeübertragungskörpern mit einer Vielzahl von Lamellen oder Rippen verwendet. Es hat sich jedenfalls als wichtig und den erfindungagemäßen überraschenden Effekt bedingend herausgestellt, einen Wärmeübertragungskörper einzusetzen, der eine große, insbesondere durch eine Vielzahl von Lamellen erzeugte Oberfläche besitzt, und diesen nach Art üblicher Konvektoren zu betreiben, also Ihn nicht wesentlich über die Zieltemperatur hinaus zu erhitzen (während Radiatoren z.B. zur Wohnraumheizung üblicherweise mit Temperaturen betrieben werden, die weit über der gewünschten Raumtemperatur liegen).

Weitere Einzelheiten und Vorteile der Erfindung ergeben sich aus der nachfolgenden rein beispielhaften und nicht-beschränkenden Beschreibung eines Ausführungsbeispiels in Verbindung mit der Zeichnung.

### KURZE BESCHREIBUNG DER FIGUREN

Fig. 1 zeigt eine erfindungsgemäße LED-Anordnung in Seitenansicht.

Fig. 2 zeigt eine perspektivische Frontansicht der Anordnung gemäß Fig. 1, gesehen von schräg oben.

Fig. 3 zeigt die Anordnung gemäß Fig. 1 In einer weiteren Seitenansicht.

### BESCHREIBUNG BEVORZUGTER AUSFÜHRUNGSFORMEN

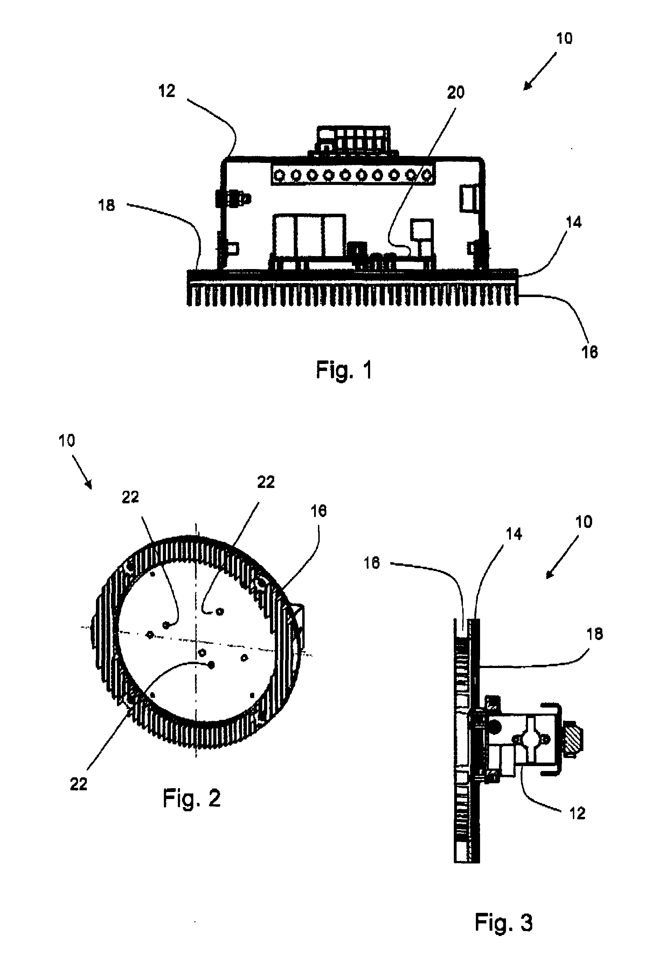

In den Fig. 1 bis 3 ist eine in Ihrer Gesamtheit mit 10 bezeichnete LED-Anordnung zum Einbau In eine Leuchte wie insbesondere einen Scheinwerfer oder ein Signallicht gezeigt, wobei die Anordnung einen Montagerahmen 12 aufweist, der einstückig oder mehrteilig ausgebildet sein kann und insbesondere zur Befestigung der LED-Anordnung an der Jeweiligen Einbausteile, also z.B. an einem Fahrzeug dient, damit die LED-Anordnung dort hinter einer entsprechenden Leuchtenscheibe gehalten werden kann.

Die Anordnung umfaßt ferner ein strombetriebenes Holzelement 14 und einen Konvektor 16, wobei bei diesem Ausführungsbelspiel sowohl der Konvektor 16 als auch das Heizelement 14 ringförmig ausgebildet und an einem am Montagerahmen vorgesehenen umlaufenden Ring 18 befestigt sind. Der Montagerahmen ist zur Befestigung der LED-Anordnung einschließlich von Heizelement und Konvektor in einem Leuchtengehäuse ausgebildet.

Das Heizelement 14 liegt hier in Form einer verhältnismäßig dünnen Heizmatte vor und kann z.B. so ausgebildet sein, daß es mit einer Spannung von 110 V betrieben werden kann, so daß es vorteilhaft ohne Zwirchenschaltung von Transformatoren direkt an das Bordstromnetz eines In üblicher Weise ausgestatteten Schienenfahrzeuges angeschlossen werden kann. Zudem hat ein solches Heizelement im Vergleich zu anderen Heizungen wie z.B. Heizlampen eine sehr hohe Lebensdauer,

Tests haben ergeben, daß es für typische Anwendungen bei Schienenfahrzeugen ausreicht, wenn das Heizelement 14 eine Leistungsaufnahme von etwa 10 bis 30 W, vorzugsweise etwa im Bereich von 20 W besitzt. So hat sich z.B. gezeigt, daß bei einem im wesentlichen runden LED-Scheinwerfer, der mit dem gezeigten ringförmigen Heizelement und dem entsprechenden ringförmigen Konvektor ausgestattet war, eine eis- und kondenswasserftele kreisförmlge Zone auch im Inneren des von dem Heizelement beschriebenen Rings erzeugt werden konnte.

Der Konvektor 16 besteht bei diesem Ausführungsbeisplel aus einem gerippten Aluminiumprofil, wobei für viele Anwendungsfälle sogenannte Standard-Kühlrippenprofile eingesetzt werden können. Dies hat den Vorteil, daß relativ preisgünstig entsprechende als passive Wärmeübertrager wirkende einstückige Körper hergestellt werden können, wobei die Profile leicht an unterschiedliche Einbausituationen und insbesondere unterschiedlich gewölbte Leuchtenscheiben angepaßt werden können. Gleiches gilt entsprechend für die Heizelemente, die durch entsprechende Formgebung von Heizdrähten und Eingießen selbiger z.B. in ein geeignetes Material an unterschiedlichste Leuchtenscheiben angepaßt werden können.

An dem Montagerahmen 12 ist ferner eine Platine 20 mit einer Anzahl von LEDs vorgesehen, wobei sich die Anzahl der LEDs natürlich nach dem jeweiligen Einsatzzweck richtet, Für Scheinwerter von Schienenfahrzeugen können z.B. neun Hochlelstungs-LEDs vorgesehen sein. Dabei sei an dieser Stelle betont, daß es sich bei den in Fig. 2 gezeigten Kreisen 22, von denen aus Gründen der Übersichtlichkeit nur einige mit Bezugszeichen versehen wurden, nicht um die in dieser Figur nicht gezeigte LEDs, sondern um Befestigungsöffnungen handelt.

Die Platine 20 ist in an sich bekannter Weise mit einer Anzahl von Steuerelementen zur Steuerung der LEDs versehen.

An geeigneter Stelle, die je nach Einbausituation variieren kann, kann an dem Montagerahmen 12 oder z,B. auch an der Platine 20 ein entsprechender Temperaturschalter zum automatischen Ein- und Ausschalten des Heizelementes vorgesehen werden. Bei typischen Anwendungen wird ein solcher Temperaturschalter so eingestellt, daß er etwa bei einer Im Inneren des Scheinwerfers gemessenen Temperatur von 13° C das Heizelement 14 einschaltet und es bei einer Temperatur von 18° C ausschaltet. Es versteht sich von selbst, daß zur Steuerung des Heizelementes unterschiedliche Varianten je nach Einbausituation vorgesehen werden können. Beispielsweise kann vorgesehen sein, daß das Ein- und Ausschalten des Heizelementes anhand von Daten einer Klimaanlage gesteuert wird. Auch kann eine manuelle Steuerung des Heizelementes vorgesehen sein. Bei einer besonders vorteilhaften Anwendung der Erfindung, nämlich der Nachrüstung von Schienenfahrzeugen, wird man Jedoch auf eine manuelle Steuerung verzichten, da diese eine zusätzliche Verkabelung bedingte. Statt dessen wird die Anordnung dabei vorteilhaft so getroffen werden, daß die LED-Anordnung als autarke Einheit einfach an die vorhandene Energieversorgung angeschlossen werden kann und damit die klassische Glühlampe ersetzt. Das Heizelement 14 kann vorteilhaft mit einem Schutzschalter versehen sein, der ein Überschreiten einer bestimmten kritischen Temperatur verhindert.

Im Rahmen des Erfindungsgedankens sind zahlreiche Abwandlungen und Weiterbildungen möglich, die sich z.B. auf die Anordnung und Ausgestaltung des Heizelementes und des Konvektors beziehen. So kann bei bestimmten Leuchteneinheiten, die z,B. verschiedene Leuchtfunktionen wie Signallicht und Scheinwerfer in einer langgestreckten Einheit nebeneinander realisieren, vorgesehen sein, daß anstelle eines Heizelementes und eines Konvektors mehrere gesonderte Heizelemente und mehrere gesonderte Konvektoren an unterschiedlichen Stelle der LED-Anordnung vorgesehen werden. Wichtig ist jedenfalls, eine Anordnung zu schaffen, die die Vorteile der LED-Teohntk wie extrem hohe Lebensdauer bei geringem Stromverbrauch mit der Möglichkeit verbindet, bei Bedarf Wärme in erhöhtem Maße abzugeben, um so die Umgebung der LED-Anordnung und damit auch eine Leuchtenscheibe zu beheizen, ohne die Leuchtenscheibe selber zu verändern.

## Patentansprüche

1. LED-Anordnung zum Einbau in eine Leuchte, Insbesondere einen Scheinwerfer oder ein Signallicht, insbesondere eines Schienenfahrzeuges, umfassend
- eine Platine mit wenigstens einer LED,
**dadurch gekennzeichnet, daß** die Anordnung
- wenigstens ein strombetriebenes Heizelement und
- wenigstens einen mit dem Heizelement in direktem oder Indirektem Kontakt stehenden Konvektor umfaßt,

2. LED-Anordnung nach Anspruch 1, **dadurch gekennzeichnet, daß** der Konvektor ein passiver Wärmeübertrager, insbesondere in Form eines einstückigen Körpers vorzugsweise aus Aluminium ist,

3. LED-Anordnung nach Anspruch 1 oder 2, **dadurch gekennzeichnet, daß** der Konvektor ein geripptes Aluminiumprofil, vorzugsweise ein zugeschnittenes Standard-Kühlrippenprofil, ist.

4. LED-Anordnung nach einem der Ansprüche 1 bis 3, **dadurch gekennzeichnet, daß** das Heizelement eine Heizmatte, insbesondere eine Silikon-Heizmatte, mit einem insbesondere in Silikon eingegossenen Heizdraht ist.

5. LED-Anordnung nach einem der Ansprüche 1 bis 4, **dadurch gekennzeichnet, daß** das Heizelement und/oder der Konvektor ringförmig ausgebildet sind.

6. LED-Anordnung nach einem der Ansprüche 1 bis 5, **dadurch gekennzeichnet, daß** ein Montagerahmen zum Halten der Platine und zur Befestigung der LED-Anordnung hinter einer Leuchtenscheibe vorgesehen ist, wobei der Montagerahmen vorzugsweise einen umlaufenden Ring besitzt, auf welchem das Heizelement befestigt ist.

7. Heizung für eine LED-Leuchte, insbesondere einen LED-Scheinwerfer oder ein LEO-Slgnallicht, insbesondere eines Schienenfahrzeuges, **dadurch gekennzeichnet, daß**
- wenigstens ein strombetriebenes Helzelement und
- wenigstens ein mit dem Heizelement in direktem oder indirektem Kontakt stehender Konvektor vorgesehen sind,

8. Heizung nach Anspruch 7, **dadurch gekennzeichnet, daß** der Konvektor ein passiver Wärmeübertrager, insbesondere in Form eines einstückigen Körpers vorzugsweise aus Aluminium ist.

9. Heizung nach Anspruch 7 oder 8, **dadurch gekennzeichnet, daß** der Konvektor ein geripptes Aluminiumprofil, vorzugsweise ein zugeschnittenes Standard-Kühlrippenprofil, ist.

10. Heizung nach einem der Ansprüche 7 bis 9, **dadurch gekennzeichnet, daß** das Heizelement eine Heizmatte, insbesondere eine Silikon-Heizmatte, mit einem Insbesondere in Silikon eingegossenen Heizdraht Ist.

11. Heizung nach einem der Ansprüche 7 bis 10, **dadurch gekennzeichnet, daß** der Konvektor ringförmig ausgebildet Ist.

12. LED-Leuchte, insbesondere LED-Scheinwerfer oder LED-Signallicht, insbesondere für Schienenfahrzeuge, Seezeichen, Landebahnbefeuerungen, umfassend
- eine Leuchtenscheibe,
- eine Platine mit wenigstens einer LED und
- einen Montagerahmen zur Befestigung der Platine hinter der Leuchtenscheibe,
**dadurch gekennzeichnet, daß**
- wenigstens ein strombetriebenes Heizelement und
- wenigstens ein mit dem Heizelement in direktem Kontakt stehender Konvektor vorgesehen sind.

13. LED-Leuchte nach Anspruch 12 mit einer LED-Anordnung nach einem der Ansprüche 1 bis 6 und/oder einer Heizung nach einem der Ansprüche 7 bis 11.

14. Fahrzeug, insbesondere Schienenfahrzeug, mit einer LED-Anordnung nach einem der Ansprüche 1 bis 6 und/oder einer Heizung nach einem der Ansprüche 7 bis 11.
